# EUROPÄISCHE PATENTSCHRIFT

(11) **EP 2 238 023 B1**
(45) Veröffentlichungstag und Bekanntmachung des Hinweises auf die Patenterteilung: **30.11.2016**
(21) Anmeldenummer: 08867831.3
(22) Anmeldetag: 29.12.2008
(51) Int. Cl.: B64C 9/02, B64C 9/24, B64C 9/14

(54) **HOCHAUFTRIEBSSYSTEM FÜR EIN FLUGZEUG**
HIGH LIFT SYSTEM FOR AN AIRCRAFT
SYSTÈME HYPERSUSTENTATEUR POUR UN AVION

(30) Priorität: 28.12.2007 US 17277; 28.12.2007 DE 102007063583
(43) Veröffentlichungstag der Anmeldung: 13.10.2010
(73) Patentinhaber: Airbus Operations GmbH, 21129 Hamburg (DE)
(72) Erfinder: VOSS, Timo, 20357 Hamburg (DE); LOERKE, Joachim, 21629 Neu Wulmstorf (DE)
(74) Vertreter: Bird & Bird LLP
(86) Internationale Anmeldenummer: PCT/EP2008/011132
(87) Internationale Veröffentlichungsnummer: WO 2009/083255

(56) Entgegenhaltungen:
- WO-A-97/49607
- WO-A-03/008266
- WO-A-2008/084260
- DE-A1-102007 020 870
- US-A- 3 847 369

## Beschreibung

Die Erfindung betrifft ein Hochauftriebssystem für ein Flugzeug.

Ein Hochauftriebssystem für ein Flugzeug ist im Dokument WO 03/008266 dargestellt und wird als nächstliegender Stand der Technik angesehen. Flügelvorderkanten-Klappen oder Slats werden derzeit beispielsweise längs einer Führungskulisse (Track) bewegt und z.B. mittels einer Zahnstange angetrieben. Die Formgebung der Führungskulisse ergibt sich aus der aerodynamisch optimierten Positionierungsdefinition des Slats. Die Führungskulisse und die Zahnstange fest oder gelenkig mit dem Slat verbunden und sind auf ihrer Länge mehrfach rollend gelagert. Eine integrierte Verzahnung ermöglicht die lineare Aktuierung über eine entsprechende Gegenverzahnung. Letztere wird durch die Abtriebsseite eines Planetengetriebes realisiert, welches wiederum über den Zentralwellenstrang (torque shaft) mit kinetischer Energie versorgt wind.

Aufgabe der Erfindung ist, ein Hochauftriebssystem zu schaffen, das in verbesserter Weise an Flugzeug-Anforderungen-anpassbar ist. Insbesondere ist Aufgabe der Erfindung, ein Hochauftriebssystem zu schaffen, mit dem es möglich ist, dass bei weitestgehender Beibehaltung der kinematischen Charakteristika hinsichtlich Translation und Rotation der erforderliche Einbauraum reduziert werden kann, so dass die konstruktiven Einschränkungen bezüglich dem Vorderholm sowie anderen Strukturbauteilen minimiert sind.

Diese Aufgabe wird mit den Merkmalen des Patentanspruchs 1 gelöst. Weitere Ausführungsformen sind in den auf diesen rückbezogenen Unteransprüchen angegeben.

Erfindungsgemäß ist ein Hochauftriebssystem für ein Flugzeug vorgesehen:
aufweisend einen Hauptflügel, eine an dem Hauptflügel des Flugzeugs angeordnete Auftriebs-Klappe, die mittels einer Klappen-Verstellmechanik zur Kopplung der Auftriebs-Klappe mit dem Hauptflügel und einer Antriebsvorrichtung zwischen einer eingefahrenen Stellung und mehreren ausgefahrenen Stellungen gegenüber dem Hauptflügel des Flugzeugs verstellbar ist. Die Klappen-Verstellmechanik weist zumindest zwei in Spannweitenrichtung entfernt voneinander angeordnete Verstell-Vorrichtungen mit jeweils einem ersten Hebel und einem zweiten Hebel auf. Der erste Hebel oder der zweite Hebel werden von der Antriebsvorrichtung zwischen zwei Endstellungen zur Verstellung der Auftriebs-Klappe bewegt.

Einer der beiden Hebel ist mit einem ersten Endstück drehbar am Hauptflügel und mit einem zweiten Endstück an der Auftriebsklappe derart gelagert, dass die Drehachsen der Lagerungen ortsfest am Hauptflügel oder an der Auftriebsklappe sind. Weiterhin ist der jeweils andere Hebel an einem Endstück drehbar an dem Hauptflügel bzw. an der Auftriebsklappe mit an dem Hauptflügel bzw. der Auftriebsklappe ortsfest angeordneter Drehachse gelagert und an einem von der Drehlagerung in Längsrichtung beabstandeten Bereich gegenüber der Auftriebsklappe bzw. dem Hauptflügel mit einer Lagerung versehen, die eine ortsfeste Drehachse an dem anderen Teil aus dem Paar aus Auftriebsklappe und Hauptflügel vorsieht und eine Verschiebung des jeweils anderen Hebels gegenüber der Drehachse zulässt.

Ein erster Hebel ist an einem ersten Endstück an einer an dem Hauptflügel ortsfest angeordneten Drehachse und an einem zweiten Endstück an einer an der Auftriebsklappe ortsfest angeordneten Drehachse gelagert. Dabei ist die Drehlagerung des zweiten Endstücks des ersten Hebels stromaufwärts der Lagerung des zweiten Endstücks des zweiten Hebels an der Auftriebsklappe gelegen.

Die Lagerung eines Endstücks des zweiten Hebels ist an der Auftriebsklappe mit einer an der Auftriebsklappe ortsfesten Drehachse realisiert. Weiterhin ist der zweite Hebel an einem von der Drehlagerung in Längsrichtung des Hebels beabstandeten Bereich gegenüber dem Hauptflügel mit der Lagerung versehen sein, die eine ortsfeste Drehachse an dem Hauptflügel aufweist und eine Verschiebung des zweiten Hebels gegenüber der Drehachse zulässt.

Dabei ist weiterhin der zweite Hebel von der Antriebsvorrichtung zwischen zwei Endstellungen zur Verstellung der Auftriebs-Klappe bewegt.

Die Lagerung am ersten Endstück des zweiten Hebels ist durch eine Drehlagerung und eine Längsführung mit einer Führungsbahn realisiert, wobei die Drehachse der Drehlagerung in der Führungsbahn geführt ist.

Der zweite Hebel kann mit einem entgegengesetzt zu dem an der Auftriebsklappe gelegenen Endstück gelenkig mit einem Abtriebshebel eines Stellantriebs gekoppelt sein, wobei die Längsführung zwischen der Drehlagerung des zweiten Hebels an der Auftriebs-Klappe und der Kopplung mit dem Abtriebshebel gelegen sein.

Die Auftriebs-Klappe kann insbesondere eine Vorderkanten-Klappe sein.

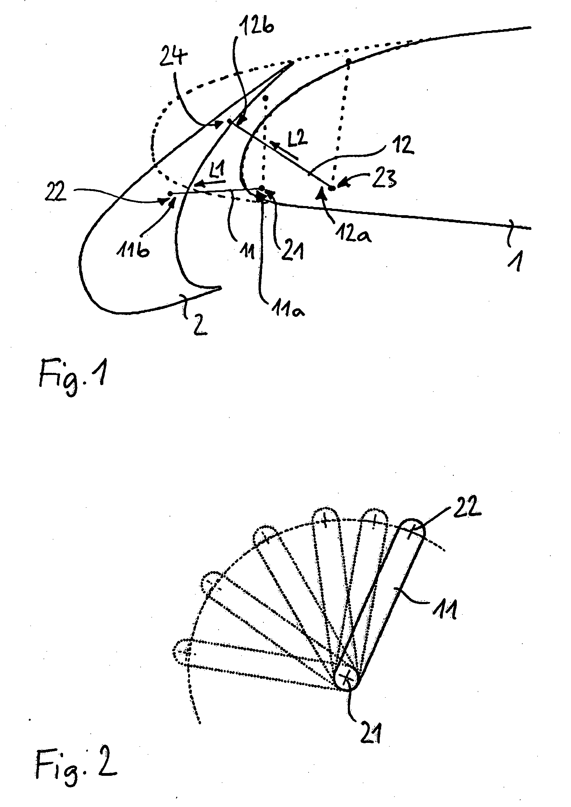

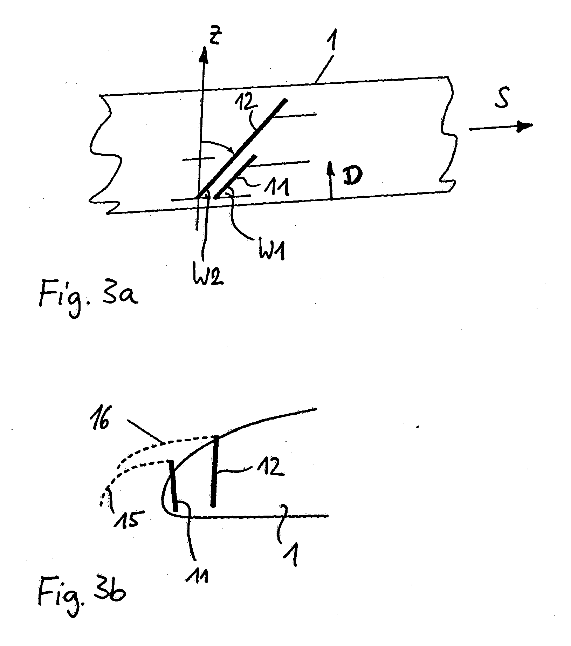

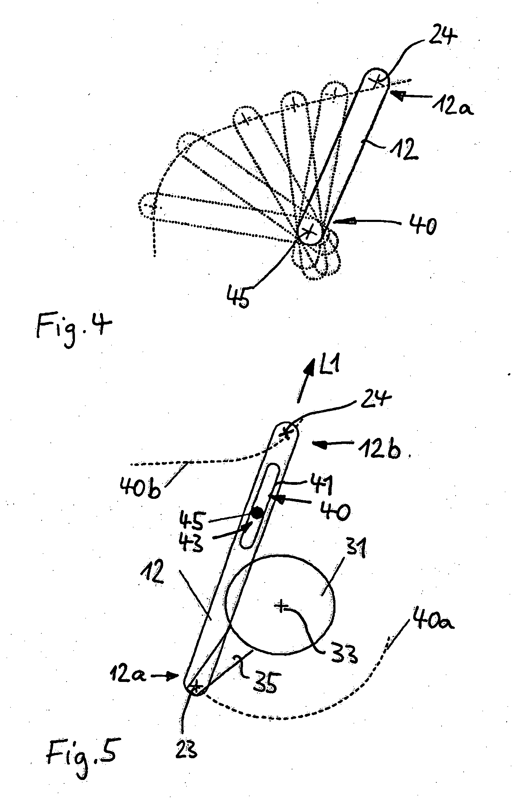

Im Folgenden werden Ausführungsbeispiele der Erfindung an Hand der beigefügte Figuren beschrieben, die zeigen:
▪ Figur 1 eine schematische Querschnittsdarstellung des erfindungsgemäßen Hochauftriebssystems von der Seite gesehen mit einem ersten Hebel und einem zweiten Hebel ohne Darstellung der Antriebsvorrichtung,
▪ Figur 2 eine schematische Darstellung der Funktionsweise des ersten Hebels,
▪ Figur 3a eine schematische Querschnittsdarstellung des erfindungsgemäß vorgesehenen Hebel-Paares von vorne gesehen mit einem ersten Hebel und einem zweiten Hebel ohne Darstellung der Antriebsvorrichtung und der Auftriebs-Klappe,
▪ Figur 3b basierend auf der Darstellung der Figur 3a eine schematische Querschnittsdarstellung des erfindungsgemäß vorgesehenen Hebel-Paares quer zur Blickrichtung der Figur 3a gesehen mit einem ersten Hebel und einem zweiten Hebel ohne Darstellung der Antriebsvorrichtung und der Auftriebs-Klappe,
▪ Figur 4 eine schematische Prinzipskizze der Funktionsweise eines erfindungsgemäß längsverschiebbar gelagerten Hebels,
▪ Figur 5 eine Ausführungsbeispiel des längsverschiebbar gelagerten Hebels nach der Figur 4.

Die Erfindung betrifft die Verstellung von Hochauftriebshilfen im Allgemeinen und ist dabei insbesondere auf Vorderkanten-Klappen (Slats), jedoch auch auf Hinterkanten-Klappen (Flaps) anwendbar, und betrifft insbesondere ein Hochauftriebssystem für ein Flugzeug aufweisend einen Hauptflügel 1, eine an dem Hauptflügel 1 des Flugzeugs angeordnete Auftriebs-Klappe 2, die mittels einer Klappen-Verstellmechanik zur Kopplung der Auftriebs-Klappe 2 mit dem Hauptflügel 1 und einer Antriebsvorrichtung zwischen einer eingefahrenen Stellung und mehreren ausgefahrenen Stellungen gegenüber dem Hauptflügel 1 des Flugzeugs verstellbar ist.

Die Klappen-Verstellmechanik 5 weist zumindest zwei in Spannweitenrichtung S entfernt voneinander angeordnete Verstell-Vorrichtungen mit jeweils einem ersten Hebel 11 und einem zweiten Hebel 12 auf.

Nach der Erfindung ist generell einer der beiden Hebel 11, 12 ist mit einem ersten Endstück 11a, 12a drehbar am Hauptflügel 1 und mit einem zweiten Endstück 11b, 12b an der Auftriebsklappe 2 derart gelagert, dass die Drehachsen der Lagerungen des einen der beiden Hebel 11, 12 ortsfest am Hauptflügel 1 oder an der Auftriebsklappe 2 sind. Weiterhin ist der jeweils andere Hebel 12, 11 an einem Endstück drehbar an dem Hauptflügel 1 oder der Auftriebsklappe 2 mit an dem jeweiligen Endstück 11b, 12b dem Hauptflügel 1 bzw. der Auftriebsklappe 2 ortsfest angeordneter Drehachse gelagert und an einem von der Drehlagerung in Längsrichtung L2, L1 beabstandeten Bereich gegenüber dem jeweils anderen Teil aus dem Paar aus Auftriebsklappe 2 und Hauptflügel 1 mit einer Lagerung versehen, die eine ortsfeste Drehachse an dem anderen Teil aus dem Paar aus Auftriebsklappe 2 und Hauptflügel 1 und eine Verschiebung des jeweils anderen Hebels gegenüber der Drehachse zulässt. Die Drehachse kann dabei am Hebel oder an dem Hauptflügel 1 bzw. der Auftriebsklappe 2 angebracht sein.

Bei dem in der Figur 1 dargestellten Ausführungsbeispiel ist der erste Hebel 11 mit seinem ersten Endstück 11a drehgelenkig am Hauptflügel 1 und mit seinem zweiten Endstück 11 b drehgelenkig an der Auftriebs-Klappe 2 angelenkt. Weiterhin ist bei diesem Ausführungsbeispiel der zweite Hebel 12 mit seinem ersten Endstück 12a gelenkig am Hauptflügel 1 gelagert und mit seinem zweiten Endstück 12b drehgelenkig an der Auftriebs-Klappe 2 angelenkt, wobei der zweite Hebel 12 mit seinem zweiten Endstück 12b an der Auftriebsklappe 2 derart gelagert ist, dass die Drehachse der Lagerung ortsfest am an der Auftriebsklappe 2 vorgesehen ist. An einer weiteren Stelle ist der zweite Hebel 12 gegenüber dem Hauptflügel 1 mit einer Lagerung versehen, die eine ortsfeste Drehachse an dem Hauptflügel 1 vorsieht und eine Verschiebung des jeweils anderen Hebels gegenüber der Drehachse zulässt.

In einem Ausführungsbeispiel der Erfindung (Figur 5) ist die Drehlagerung des zweiten Endstücks 12b des zweiten Hebels 12 stromaufwärts der Drehlagerung des zweiten Endstücks 12b des zweiten Hebels 12 gelegen und ist das erste Endstück 12a des zweiten Hebels 12 mittels einer Längsführung 40 und einer Drehlagerung 43 mit einer Drehachse 45 versehen. Die Drehachse 45 ist dabei ortsfest am Hauptflügel 2 angebracht und ist verschiebbar von einer Führungsbahn 41 der Längsführung 40 aufgenommen. In diesem Ausführungsbeispiel ist das erste Endstück 12a des zweiten Hebels 12 an eine Antriebsvorrichtung 30 gekoppelt.

Mit dem verschiebbar gelagerten zweiten Endstück des ersten 11 oder zweiten 12 Hebels ist somit das erfindungsgemäße "Swinging Bar Konzept" für die Klappen-Verstellmechanik 5 realisiert.

Es können neben dem ersten oder zweiten Hebel noch ein oder mehrere Hebel an einer Verstell-Vorrichtung 5 vorgesehen sein, die hauptflügelseitig wie auch Auftriebsklappenseitig drehgelenkig gelagert sind. Dabei kann zumindest einer des zumindest einen weiteren Hebels an einem seiner Endstücke auch zusätzlich verschiebbar gegenüber einer an dem Hauptflügel 1 oder der Auftriebs-Klappe 2 angeordneten Drehachse gelagert sein.

In dem Ausführungsbeispiel der Figur 1 ist die Verwendung von zwei Hebeln je Verstell-Vorrichtung mit insgesamt vier Drehgelenken 21, 22, 23, 24 vorgesehen. In der Figur 1 zeigt die gestrichelte Kontur die Auftriebs-Klappe 2 in ihrem eingefahrenen, d.h. an den Hauptflügel 1 herangefahrehen Zustand. Weiterhin ist die Auftriebs-Klappe 2 mit durchgezogenen Linien in einem ausgefahrenen Zustand dargestellt, der die Landestellung sein kann. In analoger Weise sind die Verstell-Hebel 11 und 12 als gestrichelte Linien in ihrem Zustand dargestellt, in dem diese die Auftriebs-Klappe 2 in ihrem eingefahrenen Zustand halten und als durchgezogene Linien dargestellt, in dem diese die Auftriebs-Klappe 2 in ihrem ausgefahrenen Zustand halten.

Der zweite Hebel 12, der mit seinem ersten Endstück gelenkig und verschiebbar an Hauptflügel 1 gelagert und mit seinem zweiten Endstück 12b drehgelenkig an der Auftriebs-Klappe 2 angelenkt ist, wird von der Antriebsvorrichtung 30 zwischen zwei Drehstellungen zur Verstellung der Auftriebs-Klappe 2 bewegt. Dabei wird der zweite Hebel 12 angetrieben (driven) und der/die andere(n) Hebel(n) dient lediglich als freigelenkiger Link (slaved).

In einer Ausführungsform der Antriebsvorrichtung 30 kann diese ein Rotary-Getriebe sein, welches seinerseits über eine Antriebswelle 31 angetrieben wird. Die Kopf- und Fußpunkte beider (bzw. aller) Hebel sind je nach Anwendungsfall vorzusehen. Bei der in der Figur 2 dargestellten Ausführungsform ist der Fußpunkt oder das erste Endstück 11a des ersten Hebels 11 in der Struktur des Hauptflügels 1 drehfest gelagert, wodurch das zweite Endstück 11 b des ersten Hebels 11 eine Kreisbahn beschreibt (Figur 2). Die Darstellung der Figur 5 zeigt, dass nach der Erfindung je nach Anwendungsfall beliebige Bewegungsbahnen der Endsfücke der Hebel erzeugt werden können. In der Figur 5 ist eine Bewegungsbahn 40a des ersten Endstücks 12a und eine Bewegungsbahn 40b des zweiten Endstücks 12b des zweiten Hebels 12 dargestellt. Die Hebellänge und somit die maximal mögliche Translationsbewegung des Slat werden prinzipiell limitiert durch die lokale Flügelprofildicke, da die Hebel 11, 12 nicht aus der Kontur herausragen dürfen. Um diese Limitierung zu umgehen, kann das System derart gestaltet sein, dass sich die Hebel 11, 12 nicht in einer Ebene und insbesondere nicht in der von der Flügeldicken-Richtung D und der Flügeltiefen-Richtung aufgespannten Ebene bewegen. Die Figuren 3a und 3b zeigen eine Gestaltung des Hochauftriebssystems, bei dem die erfindungsgemäß vorgesehenen Drehachsen des ersten und des zweiten Hebels 11, 12 winklig in Bezug auf die Spannweiten-Richtung S des Hauptflügels 1 und insbesondere in einem Winkelbereich von 45 Grad ± 20 Grad gegenüber der Spannweiten-Richtung S des Hauptflügels 1 verlaufen. Für die an der Auftriebs-Klappe 2 vorgesehenen Drehachsen gilt dieser Winkelbereich bei der eingefahrenen Auftriebs-Klappe 2. Dies bedeutet, dass die Drehebenen der Hebel 11, 12 gegenüber der von der Flugzeugs-Hochachse Z und der Flugzeug-Längsachse (nicht dargestellt) aufgespannten Ebene geneigt sind.

Die Darstellungen der Figuren 1 bis 5 zeigen ebene Schnitte von nach der Erfindung generell mit den drei Flügelachsen (Spannweiten-Richtung S, Flügeldicken-Richtung D, Flügeltiefen-Richtung) zu beschreibenden Bewegungen der Hebel 11, 12.

In einem anderen Anwendungsfall verlaufen die Längsrichtungen der Hebel 11, 12 in dem eingefahrenen Zustand der Auftriebs-Klappe 2 von vorne, d.h. in der Flügeltiefen-Richtung gesehen, in einem Winkelbereich von 45 Grad ± 20 Grad gegenüber der Flügeldicken-Richtung D des Hauptflügels 1. Diese Winkel W1, W2 beider (bzw. alle) Hebel 11, 12 können gleich oder unterschiedlich sein.

Gleichermaßen muss das System der Verstell-Hebel 11, 12 keinesfalls zwingend Vorderkanten-senkrecht arrangiert sein. Die Bewegungscharakteristik der Kopfpunkte der Hebel 11, 12 in der senkrechten, strömungsparallelen Projektionsebene gesehen gleicht somit einer Ellipse 15 bzw. 16, deren Halbachsenverhältnis direkt mit dem Neigungswinkel W1 bzw. W2 zusammen hängt (Figuren 3a, 3b). Durch das Vorsehen von für den jeweiligen Anwendungsfall optimalen Neigungswinkeln W1 bzw. W2, insbesondere bei dem Vorsehen größerer Neigungswinkel von über 45 Grad, kann bei geringem Einbauraum-Bedarf dennoch eine relativ große Translationsbewegung der Auftriebs-Klappe 2 realisiert werden.

Erfindungsgemäß ist vorgesehen, dass der zweite Hebel 12 an seinem ersten Endstück 12a gelenkig und verschiebbar am Hauptflügel 1 gelagert ist, so dass durch das Zulassen einer Verschiebung des ersten Endstücks 12a bei der Verstellung des zweiten Hebels 12 der Verstell-Mechanismus um den Freiheitsgrad eines verschiebbaren Hebelfußpunktes erweitert wird.

Derjenige Hebel, der mit einem seiner Endstücke verschiebbar gelagert ist, beschreibt somit an dem Endstück, das entgegen gesetzt zu dem verschiebbar gelagerten Endstück gelegen ist, eine Taumelbewegung, bei welcher der Hebelkopfpunkt nicht mehr auf einer kreisförmigen, sondern entlang einer gemäß der Anordnung der verschiedenen Lagerungen einstellbaren andersartigen Bahn wandert. Die Kinematik der Verstellung der Auftriebsklappe kann somit beliebig realisiert werden. Dadurch kann die Bahnkurve der Auftriebsklappe 2 oder des Slat weitaus besser an die aerodynamisch optimierte Positionierungsdefinition angepasst werden.

In der Figur 5 ist ein Ausführungsbeispiel einer Kopplung eines der Hebel mit einer Antriebsvorrichtung 30 dargestellt, die in diesem Ausführungsbeispiel durch ein Rotary-Getriebe 31 realisiert ist, das ein von einem Antriebsmotor über eine Antriebswelle 33 angetrieben wird. Der in diesem Ausführungsbeispiel mit der Auftriebsklappe 2 gekoppelte zweite Hebel 12, der an seinem zweiten Ende 12b mittels einer Schieberführung 40 längsverschiebbar gelagert ist, ist einerseits gelenkig mit dem Abtriebshebel 35 des Rotary-Getriebes 31 verbunden und andererseits gleitend auf einem mit der Struktur fest verbundenem Lager gelagert. Das Endstück 12a des ersten Hebels 12 beschreibt somit eine Kreisbahn 40a, der Hebelkopf bewegt sich hingegen auf einer Kurve 40b, die durch das geometrische Arrangement weitreichend frei einstellbar ist.

Die an Hand der Figur 5 auf den zweiten Hebel bezogenen Ausführungsbeispiele können alternativ auch für den ersten Hebel vorgesehen sein.

Nach der Efindung ist ein integrierbares Aktuierungskonzept für Hochauftriebselemente an einer Flügelvorder- oder -hinterkante vorgesehen, welches das Problem der Bauraumknappheit angemessen lösen kann, wobei gleichzeitig die Systemanforderungen hinsichtlich Rotation und Translation der betreffenden Hochauftriebs-Klappe erfüllbar bleiben.

## Patentansprüche

1. Hochauftriebssystem für ein Flugzeug aufweisend einen Hauptflügel (1), eine an dem Hauptflügel (1) des Flugzeugs angeordnete Auftriebs-Klappe (2), die mittels einer Klappen-Verstellmechanik zur Kopplung der Auftriebs-Klappe (2) mit dem Hauptflügel (1) und einer Antriebsvorrichtung zwischen einer eingefahrenen Stellung und mehreren ausgefahrenen Stellungen gegenüber dem Hauptflügel (1) des Flugzeugs verstellbar ist,
wobei die Klappen-Verstellmechanik (5) zumindest zwei in Spannweitenrichtung (S) entfernt voneinander angeordnete Verstell-Vorrichtungen (5) mit jeweils einem ersten Hebel und einem zweiten Hebel aufweist,
wobei ein erster Hebel (11) an einem ersten Endstück (11a) an einer an dem Hauptflügel (1) ortsfest angeordneten Drehachse und an einem zweiten Endstück (11b) an einer an der Auftriebsklappe (2) ortsfest angeordneten Drehachse gelagert ist, wobei die Drehlagerung des zweiten Endstücks (11b) des ersten Hebels (11) stromaufwärts der Lagerung des zweiten Endstücks (12b) des zweiten Hebels (12) an der Auftriebsklappe (2) gelegen ist,
**dadurch gekennzeichnet,**
**dass** die Lagerung eines Endstücks (12b) des zweiten Hebels (12) an der Auftriebsklappe (2) mit einer an der Auftriebsklappe (2) ortsfesten Drehachse erfolgt und der zweite Hebel(12) an einem von der Drehlagerung in Längsrichtung (L2, L1) beabstandeten Bereich gegenüber dem Hauptflügel (1) mit der Lagerung versehen ist, die eine ortsfeste Drehachse an dem Hauptflügel (1) aufweist und eine Verschiebung des zweiten Hebels (12) gegenüber der Drehachse zulässt,
wobei der zweite Hebel (12) von der Antriebsvorrichtung (30) zwischen zwei Endstellungen zur Verstellung der Auftriebs-Klappe (2) bewegt wird, und
wobei die Lagerung am ersten Endstück (12a) des zweiten Hebels (12) eine Drehlagerung und eine Längsführung (40) mit einer Führungsbahn (45) aufweist, wobei die Drehachse (45) der Drehlagerung (43) in der Führungsbahn (45) geführt ist.

2. Hochauftriebssystem nach Anspruch 1, **dadurch gekennzeichnet, dass** der zweite Hebel (12) mit einem entgegengesetzt zu dem an der Auftriebsklappe (2) gelegenen Endstück (12a) gelenkig mit einem Abtriebshebel (35) eines Stellantriebs gekoppelt ist, wobei die Längsführung (40) zwischen der Drehlagerung des ersten Hebels (11) an der Auftriebs-Klappe (2) und der Kopplung mit dem Abtriebshebel (35) gelegen ist.

3. Hochauftriebssystem nach einem der voranstehenden Ansprüche, **dadurch gekennzeichnet, dass** die Auftriebs-Klappe (2) eine Vorderkanten-Klappe ist.

4. Hochauftriebssystem nach einem der voranstehenden Ansprüche, **dadurch gekennzeichnet, dass** zumindest ein weiterer Hebel vorgesehen ist, der jeweils mit seinem ersten Endstück drehgelenkig an dem Hauptflügel (1) und mit seinem zweiten Endstück drehgelenkig an der Auftriebs-Klappe (2) angelenkt ist.

5. Hochauftriebssystem nach Anspruch 4, **dadurch gekennzeichnet, dass** der zumindest eine weiteren Hebel zusätzlich verschiebbar gegenüber einer am Hauptflügel (1) oder an der Auftriebs-Klappe (2) angeordneten Drehachse gelagert ist.

## Claims

1. A high-lift system for an aircraft, comprising a main wing (1), a lift flap (2) arranged on the main wing (1) of the aircraft, which lift flap (2) is adjustable, between a retracted position and several extended positions relative to the main wing (1) of the aircraft, by means of a flap adjustment mechanism for coupling the lift flap to the main wing and by means of a drive device,
wherein the flap adjustment mechanism (5) comprises at least two adjustment devices (5) arranged so as to be spaced apart from each other in the wingspan (S) direction, with each adjustment device comprising a first lever and a second lever,
wherein a first lever (11) is mounted with a first end piece (11a) at a rotary axis located stationary at the main wing (1), and with a second end piece (11b) at a rotary axis located stationary at the lift flap (2), wherein the rotary mounting of the second end piece (11b) of the first lever (11) is located at the lift flap (2) upstream with respect to the mounting of the second end piece (12b) of the second lever (12),
**characterized in that**
the mounting of an end piece (12b) of the second lever (12) is implemented on the lift flap (2) with a rotary axis that is stationary at the lift flap (2), and the second lever in a region that is spaced apart, in longitudinal direction, from the rotary mounting comprises the mounting vis-a-vis the main wing (1), which mounting comprises a stationary rotary axis on the main wing (1) and permits displacement of the second lever (12) relative to the rotary axis,
wherein the second lever (12) is moved, by the drive device (30), between two final positions for adjustment of the lift flap (2), and
wherein the mounting on the first end piece (12a) of the second lever (12) comprises a rotary mounting and a longitudinal guide (40) with a guide path (45), wherein the rotary axis (45) of the rotary mounting (43) is guided in the guide path (45).

2. The high-lift system according to claim 1, **characterized in that** the second lever (12), by an end piece (12a) opposite the end piece that is situated at the lift flap (2), is pivotally coupled to an output lever (35) of an actuator, wherein the longitudinal guide (40) is situated between the rotary mounting of the first lever (11) at the lift flap (2) and the coupling with the output lever (35).

3. The high-lift system according to any of the preceding claims, **characterized in that** the lift flap (2) is a leading-edge slat.

4. The high-lift system according to any of the preceding claims, **characterized in that** at least one further lever is provided that is pivotally held on the main wing (1) by it first end piece, and that is pivotally held on the lift flap (2) by the second end piece.

5. The high-lift system according to claim 4, wherein the at least one further lever is, in addition, mounted slidably relative to a rotary axis arranged on the main wing (1) or on the lift flap (2).

## Revendications

1. Système hypersustentateur pour un aéronef présentant une aile principale (1), un volet (2) de portance disposé sur l'aile principale (1) de l'aéronef, qui peut être déplacé au moyen d'un mécanisme de déplacement de volets destiné à accoupler le volet (2) de portance à l'aile principale (1) et d'un dispositif d'entraînement entre une position déployée et plusieurs positions rétractées par rapport à l'aile principale (1) de l'aéronef,
le mécanisme de déplacement (5) de volets présentant au moins deux dispositifs (5) de déplacement éloignés l'un de l'autre dans le sens de l'envergure (S) ayant respectivement un premier levier et un second levier,
un premier levier (11) sur un premier élément (11a) d'extrémité étant monté sur un axe de rotation aménagé à demeure sur l'aile principale (1) et sur un second élément (11b) d'extrémité sur un axe de rotation aménagé à demeure sur le volet (2) de portance, le montage en rotation du second élément (11b) d'extrémité du premier levier (11) étant aménagé en amont du montage du second élément (12b) d'extrémité du second levier (12) sur le volet (2) de portance,
**caractérisé en ce que**,
le montage d'un élément (12b) d'extrémité du second levier sur le volet (2) de portance s'effectue à l'aide d'un axe de rotation à demeure sur le volet (2) de portance et le second levier (12) dans une zone éloignée du montage en rotation dans la direction longitudinale (L2, L1) par rapport à l'aile principale est doté d'un montage qui présente un axe rotatif à demeure sur l'aile principale (1) et permet un déplacement du second levier (12) par rapport à l'axe de rotation,
le second levier (12) étant déplacé par le dispositif d'entraînement (30) entre deux positions finales pour déplacer le volet (2) de portance, et
le montage sur le premier élément d'extrémité (12a) du second levier (12) présentant un montage en rotation et un guide longitudinal (40) doté d'une glissière (45), l'axe de rotation (45) du montage en rotation (43) étant guidé dans la glissière (45).

2. Système hypersustentateur selon la revendication 1, **caractérisé en ce que** le second levier (12) doté d'un élément d'extrémité (12a) disposé en regard de celui sur le volet (2) de portance est articulé sur un levier (35) entraîné d'un servomoteur, le guide longitudinal (40) étant placé entre le montage en rotation du premier levier (11) sur le volet (2) de portance et l'accouplement avec le levier entraîné (35).

3. Système hypersustentateur selon l'une des revendications précédentes, **caractérisé en ce que** le volet (2) de portance est un volet de bord d'attaque.

4. Système hypersustentateur selon l'une des revendications précédentes, **caractérisé en ce qu'**il est prévu au moins un autre levier qui est relié respectivement à son premier élément d'extrémité par charnière rotative à l'aile principale (1) et à son second élément d'extrémité par charnière rotative au volet (2) de portance.

5. Système hypersustentateur selon la revendication 4, **caractérisé en ce que** l'au moins un autre levier est monté en outre coulissant par rapport à un axe rotatif aménagé sur l'aile principale (1) ou sur le volet (2) de portance.
